# EUROPEAN PATENT APPLICATION

(11) **EP 2 782 011 A2**
(43) Date of publication of application: **24.09.2014**
(21) Application number: 13188999.0
(22) Date of filing: 16.10.2013
(51) Int. Cl.: G06F 9/54

(54) **Computing device and method for expanding hardware functions of the computing device**

(30) Priority: 21.03.2013 TW 102109957
(71) Applicant: Hon Hai Precision Industry Co., Ltd., New Taipei City (TW)
(72) Inventor: Lee, Chung-I, New Taipei (TW); Lu, Chiu-Hua, New Taipei (TW); Chang, Lee-Fan, New Taipei (TW); Lin, Yu-Chun, New Taipei (TW); Lin, Chien-Chih, New Taipei (TW); Yen, Tsung-Hsin, New Taipei (TW)
(74) Representative: Gray, John James

(57) **Abstract**

In a method for expanding hardware functions of a computing device, a virtual component is created in the computing device (S301). The virtual component corresponds to a physical component desired by the computing device. The computing device detects an electronic device equipped with the physical component (S302). A communication channel between the virtual component and the electronic device is established (S303). Via the communication channel, a data processing request and data requested to be processed by the computing device are transferred from the computing device to the electronic device (S304). The computing device receives a processing result of the data from the electronic device, and stores the processing result in a storage system (S306).

## Description

### Field

Embodiments of the present disclosure relate to virtualization technology, and particularly to a computing device and a method for expanding hardware functions of the computing device.

### BackGround

Limited by a size and/or a cost of a computing device (e.g., a mobile phone), some physical components (e.g., three-dimensional accelerated graphics cards) might not be installed in the computing device. Therefore, the computing device cannot provide some functions to users.

### Summary

According to one aspect of the disclosure, a method for expanding hardware functions of a computing device is provided. The method includes: creating a virtual component in the computing device, where the virtual component corresponds to a physical component desired by the computing device; detecting an electronic device equipped with the physical component; establishing a communication channel between the virtual component and the electronic device; transferring a data processing request and data requested to be processed by the computing device to the electronic device via the communication channel; and receiving a processing result of the data from the electronic device, and storing the processing result in a storage system.

### BRIEF DESCRIPTION OF THE DRAWINGS

Embodiments of the invention are described, by way of example only, with reference to the accompanying drawings, in which:

FIG. 1 is one embodiment of an application of a computing device including a hardware function expanding system.

FIG. 2 is a block diagram of one embodiment of function modules of the hardware function expanding system in FIG. 1.

FIG. 3 is a flowchart of one embodiment of a method for expanding hardware functions of the computing device of FIG. 1.

### DETAILED DESCRIPTION

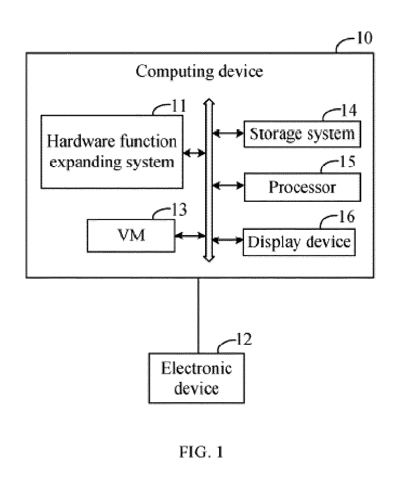

FIG. 1 is one embodiment of an application of a computing device 10 including a hardware function expanding system 11. The computing device 10 is connected to one or more electronic devices 12 (e.g., servers, only one shown). One or more virtual machines (VMs) 13 (only one shown) are installed in the computing device 10. The hardware function expanding system 11 expands hardware functions of the computing device 10 by making use of physical components installed in the electronic device 12 to process data. The computing device 10 may be a mobile device, such as a mobile phone.

In this embodiment, the computing device 10 further includes a storage system 14, at least one processor 15, and a display device 16. The storage system 14 can be a dedicated memory, such as an erasable programmable read-only memory (EPROM), a hard disk drive (HDD), or flash memory. In some embodiments, the storage system 14 can be an external storage device, such as an external hard drive, a storage card, or a data storage medium.

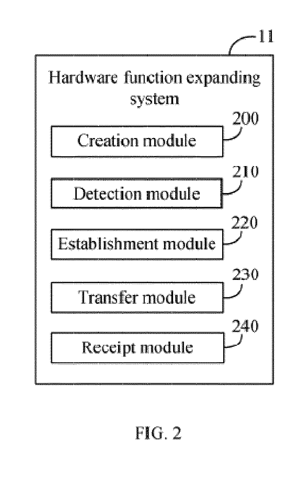

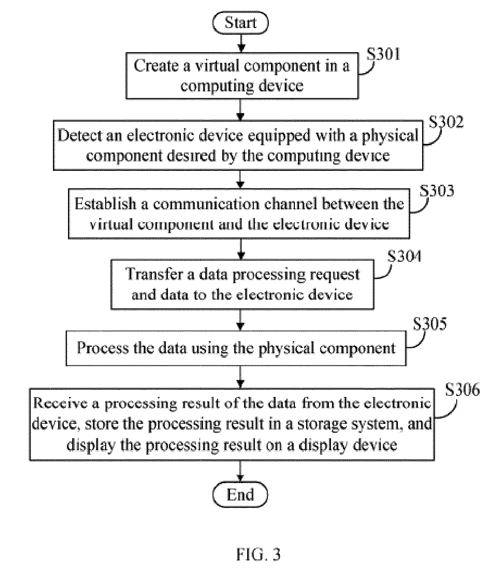

FIG. 2 is a block diagram of one embodiment of function modules of the hardware function expanding system 11 in FIG. 1. The hardware function expanding system 11 includes a creation module 200, a detection module 210, an establishment module 220, a transfer module 230, and a receipt module 240. The modules 200-240 may comprise computerized code in the form of one or more programs that are stored in the storage system 14. The computerized code includes instructions that are executed by the at least one processor 15, to provide the aforementioned functions of the hardware function expanding system 11. A detailed description of the functions of the modules 200-240 is given in reference to FIG. 3.

FIG. 3 is a flowchart of one embodiment of a method for expanding hardware functions of the computing device 10 of FIG. 1. Depending on the embodiment, additional steps may be added, others removed, and the ordering of the steps may be changed.

In step S301, the creation module 200 creates a virtual component in the computing device 10. The virtual component corresponds to a physical component desired by the computing device 10. For example, the computing device 10 is desired to provide a function of accelerated rendering of three-dimensional (3D) images while the computing device 10 is not equipped with any physical 3D accelerated graphics card. In this case, the creation module 200 creates a virtual 3D accelerated graphics card in the computing device 10. In one embodiment, the virtual component is created in a VM 13.

In step S302, the detection module 210 detects an electronic device 12 equipped with the physical component desired by the computing device 10. For example, the detection 210 detects an electronic device 12 equipped with the 3D accelerated graphics card.

In step S303, the establishment module 220 establishes a communication channel between the virtual component and the electronic device 12. In this embodiment, the establishment module 220 creates a first remote procedure call (RPC) interface in the virtual component. The electronic device 12 creates a second RPC interface in the electronic device 12. Therefore, the communication channel between the virtual component and the electronic device 12 is established.

In step S304, the transfer module 230 transfers a data processing request and data requested to be processed by the computing device 10 to the electronic device 12 via the communication channel. In this embodiment, the request module 230 transfers the data processing request and the data to the electronic device 12 via the first RPC interface created in the virtual component and the second RPC interface created in the electronic device 12.

In step S305, the electronic device 12 receives the data processing request and the data from the computing device 10. In response to the data processing request, the electronic device 12 processes the data using the physical component of the electronic device 12. For example, the electronic device 12 uses the 3D accelerated graphics card installed in the electronic device 12 to process the data and obtains 3D images.

In step S306, the receipt module 240 receives a processing result of the data from the electronic device 12, stores the processing result in the storage system 14, and displays the processing result on the display device 16. For example, the receipt module 240 receives the 3D images from the electronic device 12, stores the 3D images in the storage system 14, and displays the 3D images on the display device 16.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A method for expanding hardware functions of a computing device being executed by a processor of the computing device, the method comprising:
creating a virtual component in the computing device, wherein the virtual component corresponds to a physical component desired by the computing device;
detecting an electronic device equipped with the physical component;
establishing a communication channel between the virtual component and the electronic device;
transferring a data processing request and data requested to be processed by the computing device to the electronic device via the communication channel;
and
receiving a processing result of the data from the electronic device, and storing the processing result in a storage system.

2. The method as claimed in claim 1, wherein the virtual component is created in a virtual machine installed in the computing device.

3. The method as claimed in claim 1 or 2, wherein the communication channel between the virtual component and the electronic device is established by creating a first remote procedure call (RPC) interface in the virtual component and creating a second RPC interface in the electronic device.

4. The method as claimed in any of claims 1 to 3, further comprising:
displaying the processing result of the data on a display device.

5. A computing device, comprising:
at least one processor; and
a storage system storing a plurality of instructions, when executed by the at least one processor, causing the at least one processor to perform operations comprising:
creating a virtual component in the computing device, wherein the virtual component corresponds to a physical component desired by the computing device;
detecting an electronic device equipped with the physical component;
establishing a communication channel between the virtual component and the electronic device;
transferring a data processing request and data requested to be processed by the computing device to the electronic device via the communication channel;
and
receiving a processing result of the data from the electronic device, and storing the processing result in a storage system.

6. The computing device as claimed in claim 5, wherein the virtual component is created in a virtual machine installed in the computing device.

7. The computing device as claimed in claim 5 or 6, wherein the communication channel between the virtual component and the electronic device is established by creating a first remote procedure call (RPC) interface in the virtual component and creating a second RPC interface in the electronic device.

8. The computing device as claimed in any of claims 5 to 7, wherein the instructions further cause the at least one processor to perform operations comprising:
displaying the processing result of the data on a display device.

9. A storage medium having stored thereon instructions that, when executed by a processor of a computing device, causes the processor to perform a method for expanding hardware functions of the computing device, the method comprising:
creating a virtual component in the computing device, wherein the virtual component corresponds to a physical component desired by the computing device;
detecting an electronic device equipped with the physical component;
establishing a communication channel between the virtual component and the electronic device;
transferring a data processing request and data requested to be processed by the computing device to the electronic device via the communication channel;
and
receiving a processing result of the data from the electronic device, and storing the processing result in a storage system.

10. The storage medium as claimed in claim 9, wherein the virtual component is created in a virtual machine installed in the computing device.

11. The storage medium as claimed in claim 9 or 10, wherein the communication channel between the virtual component and the electronic device is established by creating a first remote procedure call (RPC) interface in the virtual component and creating a second RPC interface in the electronic device.

12. The storage medium as claimed in any of claims 9 to 11, wherein the method further comprising:
displaying the processing result of the data on a display device.
